Europäisches Patentamt

European Patent Office

Office européen des brevets

(19)

(11) **EP 1 502 928 A1**

(12) **EUROPEAN PATENT APPLICATION**
published in accordance with Art. 158(3) EPC

(43) Date of publication:
**02.02.2005 Bulletin 2005/05**

(51) Int Cl.⁷: **C08G 63/91**, C08J 3/24,
C08L 67/00

(21) Application number: **03715515.7**

(22) Date of filing: **27.03.2003**

(86) International application number:
**PCT/JP2003/003837**

(87) International publication number:
**WO 2003/091310 (06.11.2003 Gazette 2003/45)**

(84) Designated Contracting States:
**AT BE BG CH CY CZ DE DK EE ES FI FR GB GR HU IE IT LI LU MC NL PT RO SE SI SK TR**

(30) Priority: **24.04.2002 JP 2002121889**

(71) Applicant: **Sony Corporation**
**Tokyo 141-0001 (JP)**

(72) Inventors:
• **YAMADA, Shinichiro, SONY CORPORATION**
**Shinagawa-ku, Tokyo 141-0001 (JP)**

• **FUJIHIRA, Yuko, SONY CORPORATION**
**Shinagawa-ku, Tokyo 141-0001 (JP)**
• **MORI, Hiroyuki, SONY CORPORATION**
**Shinagawa-ku, Tokyo 141-0001 (JP)**
• **NOGUCHI, Tsutomu, SONY CORPORATION**
**Shinagawa-ku, Tokyo 141-0001 (JP)**

(74) Representative: **Sexton, Jane Helen**
**J.A. KEMP & CO.**
**14 South Square**
**Gray's Inn**
**London WC1R 5JJ (GB)**

(54) **MOLDED POLYESTER FOR HOUSING**

(57)    A biodegradable plastic material which can secure long-term reliability, particularly a biodegradable polyester material, and further a shaped article obtained therefrom. A biodegradable plastic material which is treated with a compound being capable of reacting with active hydrogen in the biodegradable plastic, and a shaped biodegradable plastic article obtained from the material.

EP 1 502 928 A1

## Description

Technical Field

The present invention relates to a biodegradable plastic material having durability improved and a shaped biodegradable plastic article using the material.

Background Art

Plastics penetrate any fields of life and industry, and the production rate of plastics has reached about 100,000,000 tons in the world per year. Most of the used plastics are disposed of, and it is regarded as one cause of disturbing the environment of the earth. Currently, as a method for solving this problem, plastic recycling and utilization of biodegradable polymers are most attracting attention.

With respect to the plastic recycling, "The Household Appliances Recycling Law" was enforced in April, 2001 for recycling used electric appliances, but almost no recovery or recycling is carried out in waste of household electric appliances other than the four types of large-size electric appliances, i.e., television sets, refrigerators, air-conditioners, and washing machines, and there is no regal regulations. For this reason, almost all used electric appliances are disposed of as non-combustible waste. A great number of appliances sold even in a small size result in much waste collectively. There is now a lack of places for disposing of waste and therefore the above fact is a serious problem.

As an example of a method for disposing of waste usually employed currently, there is a method of shredding waste. However, the disposing of waste by shredding merely reduces the volume of the waste, and, when the resultant waste shredded is buried in the ground, it remains as it is for several tens years or hundreds years, and hence the problem is not fundamentally solved. When shreds are presumed to be recycled as materials, all parts are together ground into small pieces and therefore, for example, useful materials, such as copper, are mixed with other less useful materials and hence reduced in purity, leading to a disadvantage in that the recovery efficiency is low.

On the other hand, it is considered that utilization of biodegradable polymers has the following two advantages. The first one is that, when an electric appliance has a structure such that a housing or structure body part formed from a biodegradable material, which occupies most of the volume of the electric appliance, and non-biodegradable parts, such as electronic parts, substrates, and the like, are joined together by, for example, a screw or a inserting structure, and they are easily separated from each other, parts to be recycled and parts which can be disposed of as they are can be individually dealt with by dismounting the electric appliance to some extent, and therefore it is expected that the recovery efficiency is increased.

The second one is that, when the top surface of a housing for, for example, radio sets, microphones, hanging-type TV sets, keyboards, Walkmans, portable phones, radio cassette players, or earphones is formed from a biodegradable material, that is, a portion that a human body is frequently in contact with is formed from a biodegradable material, there can be provided electric appliances having excellent safety, as compared to ones using synthetic resins.

However, all types of biodegradable polymers cannot be used in the above applications, and those to be used in a housing and structure materials for electric appliances must have physical properties required for the applications. The present inventors have found that it is a requirement that no lowering of the physical properties occur after the biodegradable polymer is held in an atmosphere in which, for example, the temperature is 80°C and the humidity is 80% for 48 hours.

The biodegradable polymer is an organic material which is decomposed by action of the natural world or the living organisms and assimilated, and it has been developed as an ideal material acclimatized to the environment. Examples of biodegradable polymers include polysaccharide derivatives, such as cellulose, starch, dextran, and chitin; peptides, such as collagen, casein, fibrin, and gelatin; polyamino acids; polyvinyl alcohol; polyamide, such as nylon 4 and a nylon 2-nylon 6 copolymer; and aliphatic polyester.

Aliphatic polyester resins as representative examples of biodegradable polymers generally have a lower melting point, and hence do not have satisfactory physical properties (especially heat resistance and impact resistance) suitable for practical shaped articles. Therefore, various studies are made on addition of inorganic filler, improvement of the crystallization rate by addition of a crystal nucleating agent, and blend of a biodegradable resin having elastic properties with a lower glass transition point, and, with respect to the shaped articles using these plastics, several patent applications have already been filed (e.g., Unexamined Japanese Patent Application Laid-Open Specification Nos. Hei 3-290461, Hei 4-146952, and Hei 4-325526). These shaped articles are used in films and packaging materials, which do not particularly require durability.

On the other hand, in the application of biodegradable aliphatic polyester resins to housing for electric appliances, electronic appliances and the like, not only heat resistance but also long-term reliability (durability under conditions at a constant temperature and at a constant humidity) are required. Electric appliances and electronic appliances individually have different duration of the product life, and small-size audio products must maintain their physical properties for 3 to 7 years under conditions at a relative humidity of 80% at 30°C. Taking into consideration the conditions under which electric appliances and electronic appliances are used at various temperatures and humidity, general biodegradable polyester has a problem of long-term reliability as mentioned above, and therefore cannot be used in the housing for electric appliances, electronic appliances, and the like. Currently, biodegradable polymers, especially aliphatic polyester resins are being utilized as materials in agriculture, forestry, and fisheries (e.g., film, plant pot, fishing line, and fish net), materials in civil engineering works (e.g., water retention sheet, plant net, and sandbag), and the fields of packaging and container (difficult to recycle since soil and food adhere to them).

When using the biodegradable polyester resins in the housing for electric appliances and electronic appliances, it is a minimum requirement that no lowering of the physical properties occur for 48 hours or longer under conditions at a constant temperature and at a constant humidity (such that, for example, the temperature is 80°C and the relative humidity is 80%) as mentioned above. In general biodegradable polyester, for example, polylactic acid having most excellent heat resistance, when the shaped article is subjected to aging test at a temperature of 80°C at a relative humidity of 80% for 48 hours, the molecular weight is 60% lowered due to hydrolysis (see Comparative Example 1 below), so that the application of this polyester to housing materials for household electric appliances is difficult. As a cause of the lowering of the physical properties, i.e., hydrolysis, it is known that, for example, in polyester, a carboxyl group at a terminal of a polymer chain catalytically hydrolyzes an ester linkage in a molecular chain. The present inventors have attempted to create a plastic material which is advantageous not only in that, for securing long-term reliability, active hydrogen in a functional group having active hydrogen in the biodegradable plastic, such as a carboxyl group or a hydroxyl group, is inhibited from catalytically hydrolyzing a main chain during use of the product comprised of the plastic material to maintain the physical properties (e.g., strength, hydrolysis resistance, and heat resistance), but also in that the plastic material is decomposed after being disposed of due to hydrolysis and microorganisms generally present in the natural world.

It is an object of the present invention to provide a biodegradable plastic material which can secure long-term reliability, particularly a biodegradable polyester material, and further a shaped article obtained therefrom.

DISCLOSURE OF THE INVENTION

The present inventors have conducted extensive and intensive studies with a view toward achieving long-term reliability of the polyester having biodegradability for use in housing materials for electric appliances, electronic appliances, and the like. As a result, it has been found that, when a compound being capable of reacting with active hydrogen in the biodegradable polyester is added to the polyester and reacted with active hydrogen to reduce an amount of the active hydrogen in the polyester, especially when an amount of residual fatty acid in the composition, namely, an acid value is a predetermined value or lower, improvement of the long-term reliability is achieved. Further, it has been found that, in addition to the biodegradable polyester, in a biodegradable polymer having an amide group or/and an amide linkage, which is treated like in the biodegradable polyester, the amount of the active hydrogen is reduced.

The active hydrogen herein means a compound having a linkage of hydrogen to oxygen, nitrogen, or the like having higher reactivity, as compared to a linkage of hydrogen to carbon, which includes, for example, a carboxyl group: -COOH, a hydroxyl group: -OH, an amino group: $-NH_2$, and an amide linkage: -NHCO-.

More specifically, by reacting a compound being capable of reacting with active hydrogen, for example, a carbodiimide compound, a polyisocyanate compound, or the like with a biodegradable plastic material to control, for example, the amount of fatty acid, i.e., the acid value to be a predetermined value or less, there can be prepared a housing material having long-term reliability such that no lowering of the physical properties occurs after an aging test, for example, at 80% at 80°C for 48 hours, and further studies are made, and thus the present invention has been completed. Specifically, the present invention is directed to:

(1) a biodegradable plastic material which is treated with a compound being capable of reacting with active hydrogen in the biodegradable plastic;

(2) the biodegradable plastic material according to item (1) above, which is characterized by being a biodegradable polyester material;

(3) the biodegradable plastic material according to item (1) above, which is characterized by being (i) a copolymer of biodegradable polyester and a biodegradable polymer having an amino group or/and an amide linkage, or (ii) a mixture of biodegradable polyester and a biodegradable polymer having an amino group or/and an amide linkage;

(4) the biodegradable plastic material according to item (1) above, which is characterized in that the biodegradable plastic material treated with a compound being capable of reacting with active hydrogen has an acid value of 0.5 or less;

(5) the biodegradable plastic material according to item (1) above, which is characterized in that, after aging for 48 hours under conditions at a constant temperature and at a constant humidity such that the temperature is 80°C and the relative humidity is 80%, an increase of an acid value is 0.2 or less and lowering of a molecular weight is 10% or less;

(6) the biodegradable plastic material according to item (1) above, which is characterized in that the active hydrogen is derived from one atomic group or two or more atomic groups selected from a carboxyl group, a hydroxyl group, an amino group, and an amide linkage in the biodegradable plastic material;

(7) the biodegradable plastic material according to item (1) above, which is characterized in that the compound being capable of reacting with active hydrogen is a crosslinking agent having a carbodiimide group;

(8) the biodegradable plastic material according to item (7) above, which is characterized in that the crosslinking agent having a carbodiimide group is dicyclohexylcarbodiimide or diisopropylcarbodiimide;

(9) the biodegradable plastic material according to item (1) above, which is characterized by containing a silicate;

(10) the biodegradable plastic material according to item (9) above, which is characterized in that the silicate has a silicon dioxide content of 50% or more;

(11) the biodegradable plastic material according to item (9) above, which is characterized in that the silicate is in a form of particles having a mean particle size of 50 μm or less;

(12) a shaped biodegradable plastic article which is obtained by shaping a biodegradable plastic material treated with a compound being capable of reacting with active hydrogen in the biodegradable plastic;

(13) the shaped biodegradable plastic article according to item (12) above, which is characterized in that the biodegradable plastic material is a biodegradable polyester material;

(14) the shaped biodegradable plastic article according to item (12) above, which is characterized in that the biodegradable plastic material is (i) a copolymer of biodegradable polyester and a biodegradable polymer having an amino group or/and an amide linkage, or (ii) a mixture of biodegradable polyester and a biodegradable polymer having an amino group or/and an amide linkage;

(15) the shaped biodegradable plastic article according to item (12) above, which is a housing for electric appliance;

(16) the shaped biodegradable plastic article according to item (12) above, which is characterized in that the biodegradable plastic material treated with a compound being capable of reacting with active hydrogen has an acid value of 0.5 or less;

(17) the shaped biodegradable plastic article according to item (12) above, which is characterized in that, after aging for 48 hours under conditions at a constant temperature and at a constant humidity such that the temperature is 80°C and the relative humidity is 80%, an increase of an acid value is 0.2 or less and lowering of a molecular weight is 10% or less;

(18) the shaped biodegradable plastic article according to item (12) above, which is characterized in that the active hydrogen is derived from one atomic group or two or more atomic groups selected from a carboxyl group, a hydroxyl group, an amino group, and an amide linkage in the biodegradable plastic material;

(19) the shaped biodegradable plastic article according to item (12) above, which is characterized in that the compound being capable of reacting with active hydrogen is a crosslinking agent having a carbodiimide group;

(20) the shaped biodegradable plastic article according to item (19) above, which is characterized in that the crosslinking agent having a carbodiimide group is dicyclohexylcarbodiimide or diisopropylcarbodiimide;

(21) the shaped biodegradable plastic article according to item (12) above, which is characterized by containing a silicate;

(22) the shaped biodegradable plastic article according to item (21) above, which is characterized in that the silicate has a silicon dioxide content of 50% or more;

(23) the shaped biodegradable plastic article according to item (21) above, which is characterized in that the silicate is in a form of particles having a mean particle size of 50 μm or less;

(24) a method for producing a shaped biodegradable plastic article, which is characterized by shaping a resultant mixture obtained by adding a compound being capable of reacting with active hydrogen to a biodegradable plastic material before, during, or after being molten and mixing them together;

(25) the method for producing a shaped biodegradable plastic article according to item (24) above, which is characterized in that the shaping is conducted by film extrusion, extrusion, or injection molding;

(26) a method for producing a shaped biodegradable plastic article, which is characterized by comprising adding a compound being capable of reacting with active hydrogen and a silicate simultaneously or individually to a biodegradable plastic material before, during, or after being molten and mixing them together, and then shaping the resultant mixture;

(27) the method for producing a shaped biodegradable plastic article according to item (26) above, which is characterized in that the shaping is conducted by film extrusion, extrusion, or injection molding;

(28) the method for producing a shaped biodegradable plastic article according to item (26) above, which is characterized in that the silicate has a silicon dioxide content of 50% or more; and

(29) the method for producing a shaped biodegradable plastic article according to item (26) above, which is characterized in that the silicate is in a form of particles having a mean particle size of 50 μm or less.

BRIEF DESCRIPTION OF THE DRAWINGS

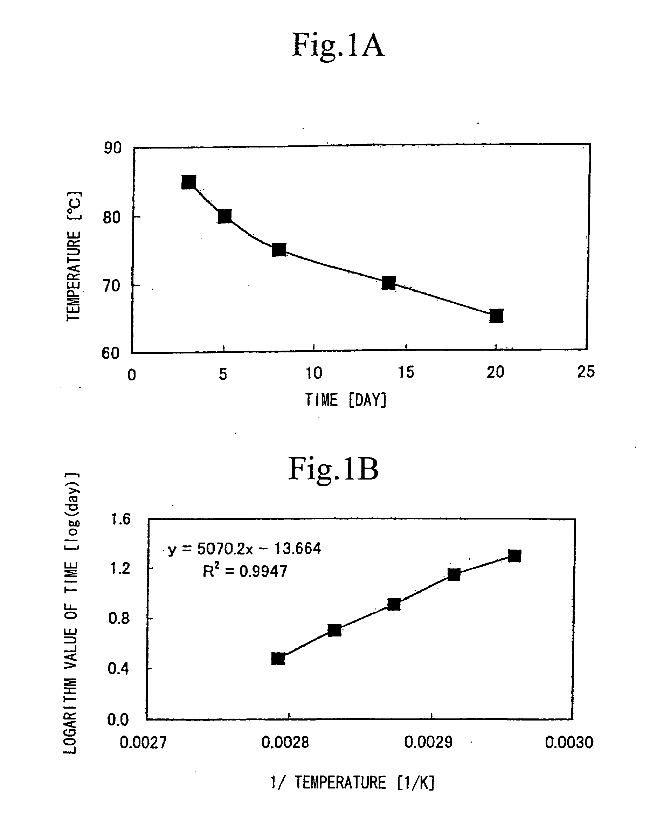

Fig. 1A is a graph obtained by plotting the time (day) and the temperature (°C) where an increase of an acid value is 0.2 or less and lowering of a molecular weight is 10% or less in Example 5. Fig. 1B is a graph obtained by plotting a logarithm of the time (log(day)) and a reciprocal of the temperature (1/temperature: 1/K) where the increase of the acid value is 0.2 or less and the lowering of the molecular weight is 10% or less in Example 5.

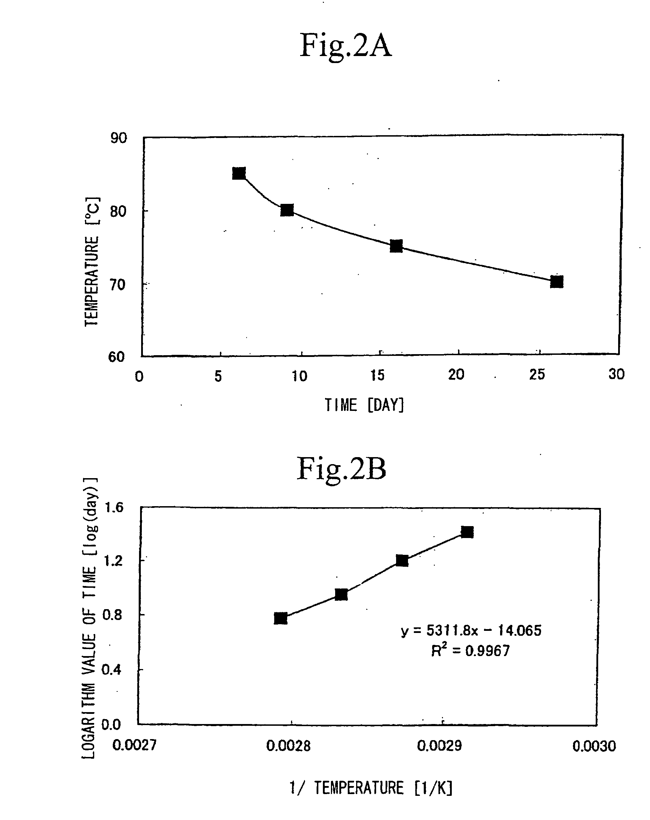

Fig. 2A is a graph obtained by plotting the time (day) and the temperature (°C) where an increase of an acid value is 0.2 or less and lowering of a molecular weight is 10% or less in Example 6. Fig. 2B is a graph obtained by plotting a logarithm of the time (log(day)) and a reciprocal of the temperature (1/temperature: 1/K) where the increase of the acid value is 0.2 or less and the lowering of the molecular weight is 10% or less in Example 6.

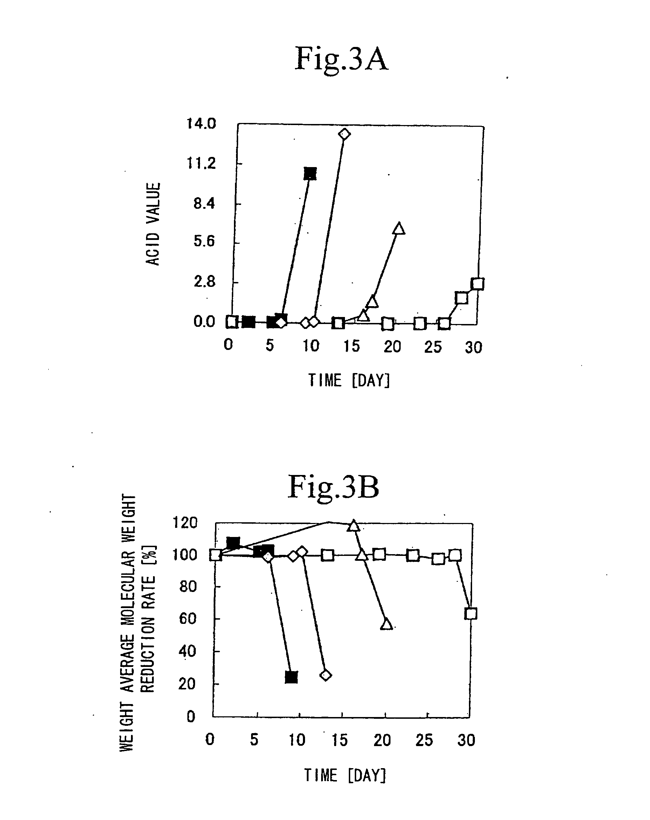

Fig. 3A is a graph obtained by plotting a change of the acid value versus the time (day) during which the physical properties of the biodegradable polyester are retained at individual temperatures in Example 6. In the figure, a solid square indicates the results in the aging at 85°C, an open rhomb at 80°C, an open triangle at 75°C, and an open square at 70°C. The relative humidity is 80%. Fig. 3B is a graph obtained by plotting a reduction rate (%) of the weight average molecular weight versus the time (day) during which the physical properties of the biodegradable polyester are retained at individual temperatures in Example 6. In the figure, the solid square indicates the results in the aging at 85°C, the open rhomb at 80°C, the open triangle at 75°C, and the open square at 70°C. The relative humidity is 80%.

BEST MODE FOR CARRYING OUT THE INVENTION

The biodegradable plastic used in the present invention is defined as a plastic which is decomposed due to microorganisms in the natural world into low-molecular compounds after being used, eventually into water and carbon dioxide (Biodegradable Plastics Society, ISO/TC-207/SC3).

Examples of biodegradable polymers as a raw material for the biodegradable plastic include polysaccharide derivatives, such as cellulose, starch, dextran, and chitin; peptides, such as collagen, casein, fibrin, and gelatin; polyamino acid; polyvinyl alcohol; polyamide, such as nylon 4 and a nylon 2-nylon 6 copolymer; and polyester, such as polyglycolic acid, polylactic acid, polysuccinate, polyoxalate, polyhydroxybutyric acid, polybutylene diglycolate, polycaprolactone, and polydioxanone, and a variety of biodegradable polymers can be used in the present invention. In other words, the biodegradable polymer is an organic material which is decomposed by action of the natural world or living organisms and assimilated, and it is an ideal material acclimatized to the environment, and any materials may be used as long as the effect aimed at by the present invention is not sacrificed. Of these, especially preferred is biodegradable polyester.

The biodegradable plastic used in the present invention may be biodegradable polyester, a copolymer of biodegradable polyester and a biodegradable polymer having an amino group or/and an amide linkage, or a mixture of biodegradable polyester and a biodegradable polymer having an amino group or/and an amide linkage as long as the effect aimed at by the present invention is not sacrificed. Examples of biodegradable polymers having an amino group or/and an amide linkage include polyamino acid, and biodegradable polyamide, such as nylon.

The biodegradable polyester used in the present invention is a polymer having an ester linkage: -CO-O- in its main chain, and, as examples of the biodegradable polyester used in the present invention, there can be mentioned polyester which is metabolized by microorganisms, and, of these, preferred are aliphatic polyester resins having excellent moldability and excellent heat resistance as well as excellent impact resistance.

Examples of the above aliphatic polyester resins include hydroxycarboxylic acid aliphatic polyester resins, such as polyoxalate, polysuccinate, polyhydroxybutyric acid, polybutylene diglycolate, polycaprolactone, polydioxanone, polymers of oxy-acids, such as lactic acid, malic acid, and glycolic acid, and copolymers of thereof. Of these, especially preferred are hydroxycarboxylic acid aliphatic polyester resins, such as polylactic acid.

The biodegradable polyester used in the present invention can be synthesized in accordance with a known method. For example, there can be mentioned (i) a lactide method, (ii) condensation polymerization between a polyhydric alcohol and a polybasic acid, and (iii) intermolecular condensation polymerization of a hydroxycarboxylic acid having in its molecule a hydroxyl group and a carboxyl group.

The lactide method is a method by ring-opening polymerization of a cyclic diester and the corresponding lactone. Examples of cyclic diesters include lactide and glycolide, and examples of lactones include ε-caprolactone, β-propiolactone, γ-butyrolactone, and δ-valerolactone.

Representative examples of polyhydric alcohols used in the condensation polymerization between a polyhydric alcohol and a polybasic acid include ethylene glycol, diethylene glycol, triethylene glycol, propylene glycol, neopentyl glycol, 1,3-butanediol, 1,4-butanediol, and 1,6-hexanediol, and representative examples of polybasic acids used include aromatic dicarboxylic acids, such as terephthalic acid, isophthalic acid, orthophthalic acid, and naphthalenedicarboxylic acid; aliphatic dicarboxylic acids, such as adipic acid, sebacic acid, oxalic acid, succinic acid, succinic anhydride, maleic acid, maleic anhydride, fumaric acid, and dimer acid; and alicyclic dicarboxylic acids, such as 1,4-cyclohexanedicarboxylic acid, and the biodegradable polyester in the present invention is preferably aliphatic polyester, and therefore it is preferred that both the polyhydric alcohol and the polybasic acid as raw materials are aliphatic compounds.

The intermolecular condensation polymerization of a hydroxycarboxylic acid having in its molecule a hydroxyl group and a carboxyl group can be achieved by a catalytic dehydration condensation method of the corresponding hydroxycarboxylic acid. Examples of hydroxycarboxylic acids include aliphatic hydroxycarboxylic acids, such as lactic acid, 2-hydroxyacetic acid, 2-hydroxypropanoic acid, 2-hydroxybutyric acid, 2-hydroxyvaleric acid, 2-hydroxyhexanoic acid, 2-hydroxyheptanoic acid, 2-hydroxyoctanoic acid, 2-hydroxy-2-methylpropanoic acid, 2-hydroxy-2-methylbutyric acid, 2-hydroxy-2-ethylbutyric acid, 2-hydroxy-2-methylvaleric acid, 2-hydroxy-2-ethylvaleric acid, 2-hydroxy-2-propylvaleric acid, 2-hydroxy-2-butylvaleric acid, 2-hydroxy-2-methylhexanoic acid, 2-hydroxy-2-ethylhexanoic acid, 2-hydroxy-2-propylhexanoic acid, 2-hydroxy-2-butylhexanoic acid, 2-hydroxy-2-pentylhexanoic acid, 2-hydroxy-2-methylheptanoic acid, 2-hydroxy-2-ethylheptanoic acid, 2-hydroxy-2-propylheptanoic acid, 2-hydroxy-2-butylheptanoic acid, 2-hydroxy-2-pentylheptanoic acid, 2-hydroxy-2-hexylheptanoic acid, 2-hydroxy-2-methyloctanoic acid, 2-hydroxy-2-ethyloctanoic acid, 2-hydroxy-2-propyloctanoic acid, 2-hydroxy-2-butyloctanoic acid, 2-hydroxy-2-pentyloctanoic acid, 2-hydroxy-2-hexyloctanoic acid, 2-hydroxy-2-heptyloctanoic acid, 3-hydroxypropanoic acid, 3-hydroxybutanoic acid, 3-hydroxypentanoic acid, 3-hydroxyhexanoic acid, 3-hydroxyheptanoic acid, 3-hydroxyoctanoic acid, 3-hydroxy-3-methylbutanoic acid, 3-hydroxy-3-methylpentanoic acid, 3-hydroxy-3-ethylpentanoic acid, 3-hydroxy-3-methylhexanoic acid, 3-hydroxy-3-ethylhexanoic acid, 3-hydroxy-3-propylhexanoic acid, 3-hydroxy-3-methylheptanoic acid, 3-hydroxy-3-ethylheptanoic acid, 3-hydroxy-3-propylheptanoic acid, 3-hydroxy-3-butylheptanoic acid, 3-hydroxy-3-methyloctanoic acid, 3-hydroxy-3-ethyloctanoic acid, 3-hydroxy-3-propyloctanoic acid, 3-hydroxy-3-butyloctanoic acid, 3-hydroxy-3-pentyloctanoic acid, 4-hydroxybutanoic acid, 4-hydroxypentanoic acid, 4-hydroxyhexanoic acid, 4-hydroxyheptanoic acid, 4-hydroxyoctanoic acid, 4-hydroxy-4-methylpentanoic acid, 4-hydroxy-4-methylhexanoic acid, 4-hydroxy-4-ethylhexanoic acid, 4-hydroxy-4-methylheptanoic acid, 4-hydroxy-4-ethylheptanoic acid, 4-hydroxy-4-propylheptanoic acid, 4-hydroxy-4-methyloctanoic acid, 4-hydroxy-4-ethyloctanoic acid, 4-hydroxy-4-propyloctanoic acid, 4-hydroxy-4-butyloctanoic acid, 5-hydroxypentanoic acid, 5-hydroxyhexanoic acid, 5-hydroxyheptanoic acid, 5-hydroxyoctanoic acid, 5-hydroxy-5-methylhexanoic acid, 5-hydroxy-5-methylheptanoic acid, 5-hydroxy-5-ethylheptanoic acid, 5-hydroxy-5-methyloctanoic acid, 5-hydroxy-5-ethyloctanoic acid, 5-hydroxy-5-propyloctanoic acid, 6-hydroxyhexanoic acid, 6-hydroxyheptanoic acid, 6-hydroxyoctanoic acid, 6-hydroxy-6-methylheptanoic acid, 6-hydroxy-6-methyloctanoic acid, 6-hydroxy-6-ethyloctanoic acid, 7-hydroxyheptanoic acid, 7-hydroxyoctanoic acid, 7-hydroxy-7-methyloctanoic acid, and 8-hydroxyoctanoic acid, and oligomers derived therefrom.

Examples of catalysts for use in preparation of hydroxycarboxylic acid aliphatic polyester resins include tin, antimony, zinc, titanium, iron, and aluminum compounds, and, of these, preferred are tin catalysts and aluminum catalysts, and especially preferred are tin octylate and aluminum acetylacetonato.

Among the hydroxycarboxylic acid aliphatic polyester resins, especially preferred is poly-L-lactic acid obtained by lactide ring-opening polymerization since it is advantageous not only in that it is hydrolyzed to L-lactic acid, but also in that its safety has been confirmed, but the hydroxycarboxylic acid aliphatic polyester resin used in the present invention is not limited to this, and therefore the lactide used in preparation of poly-L-lactic acid is not limited to the L-form lactide.

As the compound being capable of reacting with active hydrogen in the present invention, a compound having reactivity with hydrogen in a carboxylic acid group and a hydroxyl group which are terminal functional groups of a polyester resin, or hydrogen in an amino group or/and an amide linkage of the biodegradable polymer contained as a copolymer or a mixture, for example, a carbodiimide compound, an isocyanate compound, or an oxazoline compound can be used, and especially preferred is a carbodiimide compound since it can be melt-kneaded with polyester, and the hydrolyzability can be adjusted by addition of only a small amount of the compound. These compounds being capable of reacting with active hydrogen may be used individually or in combination.

The carbodiimide compound is a crosslinking agent having a carbodiimide group, which is a compound having in its molecule at least one carbodiimide linkage: - N=C=N- (including a polycarbodiimide compound). Examples include those which can be synthesized by a preparation method in which, for example, using, as a catalyst, an organophosphorus compound (e.g., O,O-dimethyl-O-(3-methyl-4-nitrophenyl)phosphorothioate, O,O-dimethyl-O-[3-methyl-4-(methylthio)phenyl]phosphorothioate, or O,O-diethyl-O-2-isopropyl-6-methylpyrimidine-4-ylphosphorothioate) or an organometallic compound (e.g., a rhodium complex, a titanium complex, a tungsten complex, or a palladium complex), various polyisocyanate is subjected to decarboxylative condensation reaction without any solvent or in an inert solvent (e.g., hexane, benzene, dioxane, or chloroform) at a temperature of about 70°C or higher.

Examples of monocarbodiimide compounds involved in the above carbodiimide compounds include dicyclohexylcarbodiimide, diisopropylcarbodiimide, dimethylcarbodiimide, diisobutylcarbodiimide, dioctyl-carbodiimide, t-butylisopropylcarbodiimide, diphenyl-carbodiimide, di-t-butylcarbodiimide, and di-β-naphthylcarbodiimide and the like, and, of these, especially preferred are dicyclohexylcarbodiimide and diisopropylcarbodiimide from a viewpoint of commercial availability with ease.

Examples of polyisocyanate compounds include 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3-cyclohexylene diisocyanate, 1,4-cyclohexylene diisocyanate, xylylene diisocyanate, tetramethylxylylene diisocyanate, hydrogenated xylylene diisocyanate, lysine diisocyanate, isophorone diisocyanate, 4,4'-dicyclohexylmethane diisocyanate, and 3,3'-dimethyl-4,4'-dicyclohexylmethane diisocyanate. In the present invention, a commercially available polyisocyanate compound is used in the Examples, and aromatic isocyanate aducts, such as Coronate (manufactured and sold by NIPPON POLYURETHANE INDUSTRY CO., LTD.; hydrogenated diphenylmethane diisocyanate) and Millionate (manufactured and sold by NIPPON POLYURETHANE INDUSTRY CO., LTD.), can be used, and in a molten blend, it is preferred to use one in the form of solid rather than liquid, for example, a polyisocyanate compound having an isocyanate group blocked with a masking agent (e.g., polyhydric aliphatic alcohol or aromatic polyol).

Examples of oxazoline compounds include 2,2'-o-phenylenebis(2-oxazoline), 2,2'-m-phenylenebis(2-oxazoline), 2,2'-p-phenylenebis(2-oxazoline), 2,2'-p-phenylenebis(4-methyl-2-oxazoline), 2,2'-m-phenylenebis(4-methyl-2-oxazoline), 2,2'-p-phenylenebis(4,4'-dimethyl-2-oxazoline), 2,2'-m-phenylenebis(4,4'-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2'-ethylenebis(4-methyl-2-oxazoline), and 2,2'-diphenylenebis(2-oxazoline).

A method for treating a biodegradable plastic with a compound being capable of reacting with active hydrogen in the biodegradable plastic is generally conducted by adding a compound being capable of reacting with active hydrogen to a biodegradable plastic before, during, or after being molten, and melting and mixing them together. It is preferred that an amount of the compound being capable of reacting with active hydrogen is about 0.1% to 5% by weight, depending on the weight of the biodegradable plastic. However, in the biodegradable plastic material of the present invention, which is treated with a compound being capable of reacting with active hydrogen, the long-term reliability and the retardation of the biodegradation rate of the used material can be controlled by appropriately selecting the type and amount of the compound being capable of reacting with active hydrogen to be incorporated, and therefore the type and amount of the compound being capable of reacting with active hydrogen to be incorporated may be determined depending on the desired product. The compounds being capable of reacting with active hydrogen may be used individually or in combination.

As mentioned above, mixing of the biodegradable plastic and the compound being capable of reacting with active hydrogen may be conducted anytime before, during, or after melting the biodegradable plastic. That is, the mixing may be conducted anytime as long as the biodegradable plastic and the compound being capable of reacting with active hydrogen are molten and mixed with each other satisfactorily.

As an example of a way for quantitatively determining active hydrogen in the biodegradable plastic treated with a compound being capable of reacting with active hydrogen, there can be mentioned a method of measuring an amount of residual fatty acid, i.e., an acid value. In the present invention, biodegradable polyester is mainly used as a material, and a carboxyl group and a hydroxyl group are present in the material. Measurement of an acid value of the biodegradable polyester leads to quantitative determination of the carboxyl group in the biodegradable polyester, that is, quantitative determination of active hydrogen for convenience sake. The acid value is a mg value of potassium hydroxide needed to neutralize free fatty acid contained in 1 g of fat, such as fatty acid. A preferred embodiment of a way of measuring an acid value is described below.

As reagents for use in measurement of an acid value, a 0.02 N KOH-EtOH (wherein KOH designates potassium hydroxide, and EtOH designates ethanol, and these apply to the following description) solution, a phenolphthalein solution, and a phenol red solution are used. Methods for preparing individual solutions are described below.

A preferred method for preparing a 0.02 N KOH-EtOH solution is as follows. About 0.35 g of potassium hydroxide (KOH) is dissolved in 5 mL of ion-exchanged water, and EtOH is added to the resultant solution so that the total volume becomes 250 mL, and placed in a container and sealed with a glass or rubber stopper, and allowed to stand for 24 hours. The supernatant liquid is quickly transferred to another light-resistant bottle while tilting, and the bottle is sealed with a rubber stopper. It is stored in the light-resistant bottle sealed. Then, this reagent is standardized using 0.02 N hydrochloric acid. 5 mL of 0.02 N hydrochloric acid is accurately measured, and 10 mL of the ion-exchanged water is added to the hydrochloric acid measured, and, for example, 2 drops of phenolphthalein reagent as an indicator is added to the resultant mixture, and the mixture is titrated with the 0.02 N KOH-EtOH solution prepared until pale pink color forms to determine a factor.

As a preferred method for preparing a phenolphthalein solution, there can be mentioned a method in which 0.025 g of phenolphthalein is dissolved in 22.5 mL of EtOH (95%), and ion-exchanged water is added to the resultant solution so that the total volume becomes 25 mL. This reagent is colorless when the pH of the solution is 8.3 or lower, and pink when the pH is 8.3 to 10.0.

As a preferred method for preparing a phenol red solution, there can be mentioned a method in which 0.025 g of phenol red is dissolved in 5 mL of EtOH (95%), and ion-exchanged water is added to the resultant solution so that the total volume becomes 25 mL. This reagent is yellow when the pH of the solution is 6.8 or lower, and red when the pH is 8.4 or higher.

As a preferred embodiment of a method of measuring an acid value using the reagents prepared, there can be mentioned a method in which, as a biodegradable polyester material, for example, 0.1 mg of polylactic acid is accurately weighed and dissolved in 10 mL of chloroform, and 10 mL of benzyl alcohol is added to the resultant solution. As an indicator, phenol red is used, and a point where a color change occurs from yellow to pale red in titration of a 0.02 N KOH-EtOH solution is determined as an end point. A volume in this case is taken as V mL.

Similarly, with respect to (benzyl alcohol 10 mL + chloroform 10 mL) as a blank, measurement is conducted. A volume in this case is taken as $V_0$ mL.

The weight (mg) of KOH needed to neutralize free fatty acid contained in 1 g of a sample is determined by the following formula.

$$AV \text{ (acid value)} = \{(V-V_0) \times 0.02 \times F \times 56.11\}/S$$

In the above formula, F represents a factor of the 0.02 N KOH-EtOH solution, V represents the volume (mL) of the 0.02 N KOH-EtOH solution needed in the measurement for the sample, $V_0$ represents the volume (mL) of the 0.02 N KOH-EtOH solution needed in the titration for a blank, and S represents the weight (g) of the sample.

As another example of a way for quantitatively determining active hydrogen in the biodegradable plastic treated with a compound being capable of reacting with active hydrogen, there can be mentioned a method in which the biodegradable plastic is reacted with a Grignard reagent. In this method, differing from the above-described method, not only a carboxyl group but also a hydroxyl group, an amino group, and the like can be quantitatively determined, and therefore the method can be applied to a copolymer of polyester and polyamide or a mixture of polyester and polyamide. Active hydrogen is stoichiometrically reacted with methylmagnesium iodide to generate methane. This reaction is carried out in a reaction vessel in an apparatus for quantitatively determining active hydrogen, and methane gas generated is collected in a gas burette to measure the volume of the methane gas, so that active hydrogen can be quantitatively determined. Examples of Grignard reagents include known Grignard reagents, such as phenylmagnesium bromide, ethylmagnesium chloride, propylmagnesium chloride, and butylmagnesium chloride in addition to methylmagnesium iodide.

It is preferred that the biodegradable plastic material treated with a compound being capable of reacting with active hydrogen before being aged has an acid value of about 0.5 or lower. When the acid value is about 0.5 or lower, the biodegradable plastic is unlikely to suffer hydrolysis due to active hydrogen, making it possible to obtain a biodegradable plastic material having durability in aging for 48 hours under conditions at a constant temperature and at a constant humidity such that the temperature is 80°C and the relative humidity is 80%.

In the biodegradable plastic material treated with a compound being capable of reacting with active hydrogen, it is preferred that, after aging, the increase of the acid value is about 0.2 or lower. Further, it is preferred that the lowering of the molecular weight is 10% or less. When these values fall in the respective ranges, the long-term reliability required in the use of, e.g., housing for electric appliance can be secured.

In the biodegradable plastic material of the present invention, reinforcement, inorganic or organic filler, an antioxidant, a heat stabilizer, an ultraviolet absorber, and a lubricant, a wax, a coloring agent, a crystallization promoter, and a degradable organic substance, such as starch, may be used in an amount such that the biodegradable plastic material before being aged has an acid value not higher than 0.5, and these may be used individually or in combination.

Examples of reinforcement include glass microbeads; carbon fiber; chalk; quartz, such as novoculite; asbestos; silicate, such as feldspar, mica, talc, and wollastonite; and kaolin. Examples of inorganic filler include metal oxide fine particles, such as alumina, silica, magnesia, and ferrite; silicate, such as talc, mica, kaolin, and zeolite; and fine particles of barium sulfate, calcium carbonate, and fullerene in addition to carbon and silicon dioxide;, and examples of organic filler include epoxy resins, melamine resins, urea resins, acrylic resins, phenolic resins, polyimide resins, polyamide resins, polyester resins, and Teflon (registered trademark) resins. Of these, preferred are carbon and silicon dioxide. The above filler may be used individually or in combination. The silicate as inorganic filler functions also as a flame retardant. In silicates preferred as inorganic filler, more preferred are those having a silicon dioxide content of about 50% or more. This is because silicates are sampled from natural mineral and therefore they inevitably contain substances other than silicates (e.g., MgO, CaO, $Fe_2O_3$, and $Al_2O_3$) to some extent. It is preferred that the effect of the inorganic filler as a flame retardant is not inhibited by impurities.

With respect to the form of the above-mentioned additive used in the present invention, there is no particular limitation, but it is preferred that the additive is in the form of particles. The particle size can be appropriately selected depending on the type of the additive. For example, when a silicate is used as inorganic filler, it is preferred that the silicate has a mean particle size of about 50 μm or less, as measured by a laser diffraction method. In this case, the silicate may have any particle size distribution.

Examples of the above antioxidants include phenolic, amine, phosphorus, sulfur, hydroquinone, and quinoline antioxidants. Examples of phenolic antioxidants include hindered phenols; $C_{2-10}$alkylenediol-bis [3-(3,5-di-branched $C_{3-6}$alkyl-4-hydroxyphenyl)propionate], such as 2,6-di-t-butyl-p-cresol, 1,3,5-trimethyl-2,4,6-tris(3,5-di-t-butyl-4-hydroxybenzyl)benzene, 2,2'-methylenebis(4-methyl-6-t-butylphenol), 4,4'-methylenebis(2,6-di-t-butylphenol), 4,4'-butylidenebis(3-methyl-6-t-butylphenol), and 1,6-hexanediol-bis[3-(3,5-di-t-butyl-4-hydroxyphenyl)propionate]; di- or trioxy$C_{2-4}$alkylenediol-bis[3-(3,5-di-branched $C_{3-6}$alkyl-4-hydroxyphenyl)propionate], such as triethylene glycol bis[3-(3-t-butyl-5-methyl-4-hydroxyphenyl)propionate]; $C_{3-8}$alkanetriol-bis[3-(3,5-di-branched $C_{3-6}$alkyl-4-hydroxyphenyl)propionate], such as glycerol tris[3-(3,5-di-t-butyl-4-hydroxyphenyl)propionate]; $C_{4-8}$alkanetetraol tetrakis[3-(3,5-di-branched $C_{3-6}$alkyl-4-hydroxyphenyl) propionate], such as pentaerythritol tetrakis[3-(3,5-di-t-butyl-4-hydroxyphenyl)propionate]; n-octadecyl-3-(4', 5'-di-t-butylphenol)propionate, n-octadecyl-3-(4'-hydroxy-3',5'-di-t-butylphenol)propionate, stearyl-2-(3,5-di-t-butyl-4-hydroxyphenol)propionate, distearyl-3,5-di-t-butyl-4-hydroxybenzylphosphonate, 2-t-butyl-6-(3-t-butyl-5-methyl-2-hydroxybenzyl)-4-methylphenyl acrylate, N,N'-hexamethylenebis(3,5-di-t-butyl-4-hydroxy-hydrocinnamamide), 3,9-bis{2-[3-(3-t-butyl-4-hydroxy-5-methylphenyl)propionyloxy]-1,1-dimethylethyl}-2,4,8,10-tetraoxaspiro[5,5]undecane, 4,4'-thiobis (3-methyl-6-t-butylphenol), and 1,1,3-tris(2-methyl-4-hydroxy-5-t-butylphenol)butane. Examples of amine antioxidants include phenyl-1-naphthylamine, phenyl-2-naphthylamine, N,N'-diphenyl-1,4-phenylenediamine, and N-phenyl-N'-cyclohexyl-1,4-phenylenediamine. Examples of phosphorus antioxidants include phosphite compounds, such as triisodecyl phosphite, triphenyl phosphite, trisnonylphenyl phosphite, diphenylisodecyl phosphite, phenyldiisodecyl phosphite, 2,2-methylenebis(4,6-di-t-butylphenyl)octyl phosphite, 4,4'-butylidenebis(3-methyl-6-t-butylphenyl)ditridecyl phosphite, tris(2,4-di-t-butylphenyl) phosphite, tris(2-t-butyl-4-methylphenyl) phosphite, tris(2,4-di-t-amylphenyl) phosphite, tris(2-t-butylphenyl) phosphite, bis(2-t-butylphenyl)phenyl phosphite, tris[2-(1,1-dimethylpropyl)-phenyl] phosphite, tris[2,4-(1,1-dimethylpropyl)-phenyl] phosphite, tris(2-cyclohexylphenyl) phosphite, and tris(2-t-butyl-4-phenylphenyl) phosphite; and phosphine compounds, such as triethylphosphine, tripropylphosphine, tributylphosphine, tricyclohexylphosphine, diphenylvinylphosphine, allyldiphenylphosphine, triphenylphosphine, methylphenyl-p-anisylphosphine, p-anisyldiphenylphosphine, p-tolyldiphenylphosphine, di-p-anisylphenylphosphine, di-p-tolylphenylphosphine, tri-m-aminophenylphosphine, tri-2,4-dimethylphenylphosphine, tri-2,4,6-trimethylphenylphosphine, tri-o-tolylphosphine, tri-m-tolylphosphine, tri-p-tolylphosphine, tri-o-anisylphosphine, tri-p-anisylphosphine, and 1,4-bis(diphenylphosphino)butane. Examples of hydroquinone antioxidants include 2,5-di-t-butylhydroquinone, examples of quinoline antioxidants include 6-ethoxy-2,2,4-trimethyl-1,2-dihydroquinoline, and examples of sulfur antioxidants include dilaurylthiodipropionate and distearylthiodipropionate. Of these, preferred examples of antioxidants include phenolic antioxidants (especially, hindered phenols), e.g., polyol-poly[(branched $C_{3-6}$alkyl group and hydroxyl group substituted phenyl)propionate]. The antioxidants may be used individually or in combination.

Examples of the above heat stabilizers include nitrogen-containing compounds (e.g., basic nitrogen-containing compounds, such as polyamide, poly-β-alanine copolymers, polyacrylamide, polyurethane, melamine, cyanoguanidine, and melamine-formaldehyde condensation products), alkali or alkaline earth metal-containing compounds [especially, organic carboxylic acid metal salts (e.g., calcium stearate and calcium 12-hydroxystearate), metal oxides (e.g., magnesium oxide, calcium oxide, and aluminum oxide), metal hydroxides (e.g., magnesium hydroxide, calcium hydroxide, and aluminum hydroxide), and metal carbonates], zeolite, and hydrotalcite. Especially preferred are alkali or alkaline earth metal-containing compounds (especially, alkaline earth metal-containing compounds, such as magnesium compounds and calcium compounds), zeolite, and hydrotalcite. These heat stabilizers may be used individually or in combination.

Examples of the above ultraviolet absorbers include conventionally known benzophenone, benzotriazole, cyanoacrylate, salicylate, and oxalic acid anilide ultraviolet absorbers. Examples include a [2-hydroxy-4-(methacryloyloxyethoxy)benzophenone]-methyl methacrylate copolymer, a [2-hydroxy-4-(methacryloyloxymethoxy)benzophenone]-methyl methacrylate copolymer, a [2-hydroxy-4-(methacryloyloxyoctoxy)benzophenone]-methyl methacrylate copolymer, a [2-hydroxy-4-(methacryloyloxydodecyloxy)benzophenone]-methyl methacrylate copolymer, a [2-hydroxy-4-(methacryloyloxybenzyloxy)benzophenone]-methyl methacrylate copolymer, a [2,2'-dihydroxy-4-(methacryloyloxyethoxy)benzophenone]-methyl methacrylate copolymer, a [2,2'-dihydroxy-4-(methacryloyloxymethoxy) benzophenone]-methyl methacrylate copolymer, and a [2,2'-dihydroxy-4-(methacryloyloxyoctoxybenzophenone)-methyl methacrylate copolymer. These ultraviolet absorbers may be used individually or in combination.

Examples of the above lubricants include petroleum lubricating oil, such as liquid paraffin; synthetic lubricating oil, such as hydrocarbon halide, diester oil, silicone oil, and fluorine silicone; various modified silicone oil (epoxy-modified, amino-modified, alkyl-modified, and polyether-modified silicone oil); silicone lubricating substances, e.g., copolymers of an organic compound, such as polyoxyalkylene glycol, and silicone; silicone copolymers; various fluorine surfactants, such as fluoroalkyl compounds; fluorine lubricating substances, such as trifluoromethylene chloride lower polymers; waxes, such as paraffin wax and polyethylene wax; higher aliphatic alcohols; higher aliphatic amides; higher fatty acid esters; higher fatty acid salts; and molybdenum disulfide. Of these, it is especially preferred to use silicone copolymers (obtained by block-polymerizing or graft-polymerizing silicone on a resin). As silicone copolymers, there can be used ones which are obtained by block-polymerizing or graft-polymerizing silicone on an acrylic resin, a polystyrene resin, a polynitrile resin, a polyamide resin, a polyolefin resin, an epoxy resin, a polybutyral resin, a melamine resin, a vinyl chloride resin, a polyurethane resin, or a polyvinyl ether resin, and it is preferred to use silicone graft copolymers. These lubricating substances may be used individually or in combination.

Examples of the above waxes include olefin waxes, such as polypropylene wax and polyethylene wax, paraffin wax, Fischer-Tropsch wax, microcrystalline wax, montan wax, fatty acid amide waxes, higher aliphatic alcohol waxes, higher fatty acid waxes, fatty acid ester waxes, carnauba wax, and rice wax. These waxes may be used individually or in combination.

Examples of the above coloring agents include inorganic pigments and organic pigments and dyes. Examples of inorganic pigments include chromium pigments, cadmium pigments, iron pigments, cobalt pigments, ultramarine blue, and iron blue. Specific examples of organic pigments and dyes include carbon black; phthalocyanine pigments, such as copper phthalocyanine; quinacridone pigments, such as quinacridone magenta and quinacridone red; azo pigments, such as Hansa yellow, disazo yellow, permanent yellow, permanent red, and naphthol red; and nigrosine dyes, such as spirit black SB, nigrosine base, and oil black BW, oil blue, and alkali blue. These coloring agents may be used individually or in combination.

Examples of the above crystallization promoters include organic acid salts, such as sodium p-t-butylbenzoate, sodium montanate, calcium montanate, sodium palmitate, and calcium stearate; inorganic salts, such as calcium carbonate, calcium silicate, magnesium silicate, calcium sulfate, barium sulfate, and talc; and metal oxides, such as zinc oxide, magnesium oxide, and titanium oxide. These crystallization promoters may be used individually or in combination.

A biodegradable plastic shaped article is obtained by shaping the biodegradable plastic material used in the present invention. The biodegradable plastic shaped article can be used as a housing for, for example, electric appliances, such as radio set, microphone, TV set, keyboard, portable music player, and personal computer.

Using the biodegradable plastic material of the present invention as a raw material, a housing for, for example, electric appliance may be produced in accordance with a known production method. Means for shaping can be selected from a variety of known means depending on the type of the shaped article. Examples of shaping methods include film extrusion, extrusion, and injection molding, and, of these, especially preferred is injection molding. Extrusion or injection molding can be carried out in accordance with a general method using, for example, a known extruder, such as a single screw extruder, a multi-screw extruder, or a tandem extruder, or a known injection molding machine, such as an in-line screw type injection molding machine, a multilayer injection molding machine, or a twin-head injection molding machine, and the material is molded into a desired shape.

A preferred method for shaping is as follows. The biodegradable plastic and a compound being capable of reacting with active hydrogen are mixed together by means of a Henschel mixer of about 20 L at about 500 rpm for about 2 minutes, and then melt-kneaded by means of a twin-screw extruder set at about 220°C to obtain pellets. Using the pellets, a housing for, for example, electric appliance is produced in accordance with a general method.

Examples

Working Examples of the biodegradable polyester of the present invention were actually conducted, but the Examples should not be construed as limiting the scope of the present invention.

In the following Examples, the molecular weight is weight average molecular weight (polystyrene molecular weight) as measured by gel permeation chromatography (GPC).

Apparatus: MILLPORE Waters 600E system controller; detector: UV (Waters 484) and RI (Waters 410); standard sample: polystyrene.

A specimen was dissolved in chloroform so that the concentration became 0.15% by weight, and stirred for 2 hours, and then the resultant solution was filtered by means of a $\phi$ 0.25 μm filter to prepare a sample.

Example 1

To polylactic acid (trade name: Lacea H100J; manufactured and sold by Mitsui Chemical, Inc.) was added 1% by weight of carbodiimide (trade name: Carbodilite 10B; manufactured and sold by Nisshinbo Industries, Inc.) as a compound being capable of reacting with active hydrogen, and kneaded together at a kneading temperature of 185°C for 5 minutes. The acid value was reduced from 1.8 to 0.1. The kneaded mixture was shaped into a 5 cm square plate form having a thickness of 1 mm, and subjected to aging for 48 hours under conditions such that the humidity was 80% at 80°C. The increase of the acid value was 0.2 or less, and the lowering of the molecular weight was 10% or less.

Example 2

Kneading was conducted in substantially the same manner as in Example 1 except that the amount of the carbodiimide added was changed to 0.5% by weight and 0.8% by weight to prepare test specimens. The acid value in the specimen containing 0.5% by weight of carbodiimide was 0.8, and the acid value in the specimen containing 0.8% by weight of carbodiimide was 0.5. After aging at a humidity of 80% at 80°C for 48 hours, in the specimen containing 0.8% by weight of carbodiimide, the increase of the acid value was 0.2 or less, and the lowering of the molecular weight was 10% or less. On the other hand, in the specimen containing 0.5% by weight of carbodiimide, the acid value was increased from 0.8 to 5.2, and the molecular weight was 60% lowered.

Example 3

Substantially the same procedure as in Example 1 was conducted except that 1% by weight of carbodiimide (trade name: Carbodilite 10B; manufactured and sold by Nisshinbo Industries, Inc.) was added individually to polycaprolactone (trade name: Celgreen, grade: PH; manufactured and sold by Dicel Chemical Industries, Ltd.) and polybutylene succinate (trade name: BIONOLLE #1000; manufactured and sold by Showa Highpolymer Co., Ltd.) to prepare kneaded mixtures. The acid values in the kneaded mixtures were respectively 0.4 and 0.2. After aging at a humidity of 80% at 80°C for 48 hours, in each kneaded mixture, the increase of the acid value was 0.2 or less, and the lowering of the molecular weight was 10% or less.

Example 4

Substantially the same procedure as in Example 1 was conducted except that, instead of carbodiimide, 1% by weight of block-type polyurethane (Millionate MS50; manufactured and sold by NIPPON POLYURETHANE INDUSTRY CO., LTD.; isocyanate group content: 15%) was added to prepare a test specimen. The acid value was reduced to 0.2. After aging under the same conditions as those in Example 1, the increase of the acid value was 0.2 or less, and the lowering of the molecular weight was 10% or less.

Example 5

The test specimen in Example 1 was subjected to aging under conditions such that the humidity was fixed at 80% and the temperature was changed to 85°C, 80°C, 75°C, 70°C, and 65°C to measure changes in the acid value and the molecular weight. In the aging at 85°C, no changes occurred for 48 hours, but, after a lapse of 72 hours, the acid value was increased to 0.8, and, after 96 hours, the acid value was increased to 5.1 and the molecular weight was 60% lowered. Thus, after aging at 85°C for 3 days, the increase of the acid value was 0.2 or less, and the lowering of the molecular weight was 10% or less. Similarly, after aging at 80°C for 5 days, aging at 75°C for 8 days, aging at 70°C for 14 days, and aging at 65°C for 20 days, the increase of the acid value was 0.2 or less, and the lowering of the molecular weight was 10% or less.

On the basis of the results in Example 5, a graph obtained by plotting the time (day) and the temperature where the increase of the acid value is 0.2 or less and the lowering of the molecular weight is 10% or less is shown in Fig. 1A. In addition, it is known that the logarithm of the reaction rate is proportional to the reciprocal of the temperature (1/temperature)(Arrhenius equation), and, in accordance with this low, the reciprocal of the temperature (1/temperature) and the logarithm of the time are plotted (Arrhenius plot) on Fig. 1B. This plot is linear, and, from the slope and the intercept of the linear plot, the relationship between the time and the temperature until changes in the acid value and the molecular weight are observed is represented by the following formula:

$$t = (10^{5070 \times \{1/273.15 + \text{temperature } (°C)\} - 13.664})/365$$

wherein t represents a period of time (year) until changes in the acid value and the molecular weight are observed.

From the formula, it was found that a period of time until an increase of the acid value and lowering of the molecular weight were observed in the aging at a humidity of 80% at 30°C was 3.2 years. Therefore, it is expected that, by adding a compound being capable of reacting with active hydrogen to control the acid value to be 0.5 or less, the physical properties can be secured for at least 3 years in an environment at a relative humidity of 80% at 30°C.

Example 6

Substantially the same experiment as in Example 5 was conducted except that the amount of carbodiimide added was changed to 2% by weight, and like in Figs. 1A and 1B, a graph obtained by plotting the time (day) and the temperature where the increase of the acid value is 0.2 or less and the lowering of the molecular weight is 10% or less is shown in Fig. 2A. In addition, a graph of Arrhenius plot is shown in Fig. 2B. Like in the above Example, this plot is linear, and, from the slope and the intercept of the linear plot, the relationship between the time and the temperature until changes in the acid value and the molecular weight are observed is represented by the following formula:

$$t = (10^{5312 \times \{1/273.15 + \text{temperature } (°C)\} - 14.065})/365$$

wherein t represents a period of time (year) until changes in the acid value and the molecular weight are observed.

From the formula, it was found that a period of time until an increase of the acid value and lowering of the molecular weight were observed in the aging at a humidity of 80% at 30°C was 7.9 years. It is expected that, when the initial acid value is 0.5 or less and the amount of the compound being capable of reacting with active hydrogen is two times that in Example 5, the physical properties can be secured for 8 years in the aging under the same conditions as those in Example 1, and it has been found that, by adjusting the amount of the compound being capable of reacting with active hydrogen, the term of the guaranteed physical properties can be controlled depending on the desired product life.

With respect to the samples at individual temperatures in Example 6, in each aging at a humidity of 80% at individual temperatures, a change in the acid value versus the time is shown in Fig. 3A, and a change in the molecular weight versus the time is shown in Fig. 3B. From Example 6, it has been found that, by adjusting the amount of the additive, the term for the guaranteed physical properties can be controlled depending on the desired product life, and further from Figs. 3A and 3B, it has been found that, after a lapse of certain retention time, the hydrolysis is accelerated and excellent biodegradability is exhibited. Further, the hydrolyzability was equivalent to that of the material (biodegradable polyester) containing no compound being capable of reacting with active hydrogen. That is, it has been found that the specimen retains its physical properties during being used, and, after the term of the physical properties retained, it can exhibit biodegradability equivalent to that of biodegradable polyester.

Comparative Example 1

With respect to two types of polylactic acids (manufactured and sold by Mitsui Chemical, Inc., and Shimadzu Corporation), aging was conducted under the same conditions as those in Example 1 in a manner similar to the one in Example 1 except that a compound being capable of reacting with active hydrogen was not added. The acid value of each specimen was 1.8. After aging, in each specimen, the molecular weight was 60% lowered and the flexural strength was lowered to 1/10, and thus the specimens were not able to be used at all as a housing.

Comparative Example 2

With respect to polycaprolactone (trade name: Celgreen, grade: PH; manufactured and sold by Dicel Chemical Industries, Ltd.) and polybutylene succinate (trade name: BIONOLLE #1000; manufactured and sold by Showa Highpolymer Co., Ltd.) used in Example 3, kneaded mixtures were individually prepared in a manner similar to the one in Example 1 except that a compound being capable of reacting with active hydrogen was not used. After aging under the same conditions as those in Example 1 (at a humidity 80% at 80°C for 48 hours), the molecular weight was 80% lowered, and thus the specimens were not able to be used at all as a housing.

The biodegradable plastic material of the present invention has a composition which secures storage stability (at a humidity of 80% at 30°C for 3 years) of a plastic having biodegradability using no fossil raw material, especially biodegradable polyester, and can be practically used in the durable material application, e.g., housing for electric appliances and computers. The biodegradable plastic shaped article obtained therefrom exhibits hydrolyzability substantially equivalent to that of one containing no compound being capable of reacting with active hydrogen after a lapse of the term for storage stability, and is decomposed in a culture solution or soil containing microorganisms and disappears, thus making it possible to reduce the volume of waste. In addition, the biodegradable plastic shaped article is advantageous in that it can be produced by a simple operation.

**Claims**

1. A biodegradable plastic material which is treated with a compound being capable of reacting with active hydrogen in the biodegradable plastic.

2. The biodegradable plastic material according to claim 1, **characterized by** being a biodegradable polyester material.

3. The biodegradable plastic material according to claim 1, **characterized by** being (1) a copolymer of biodegradable polyester and a biodegradable polymer having an amino group or/and an amide linkage, or (2) a mixture of biodegradable polyester and a biodegradable polymer having an amino group or/ and an amide linkage.

4. The biodegradable plastic material according to claim 1, **characterized in that** said biodegradable plastic material treated with a compound being capable of reacting with active hydrogen has an acid value of 0.5 or less.

5. The biodegradable plastic material according to claim 1, **characterized in that**, after aging for 48 hours under conditions at a constant temperature and at a constant humidity in which the temperature is 80°C and the relative humidity is 80%, an increase of an acid value is 0.2 or less and lowering of a molecular weight is 10% or less.

6. The biodegradable plastic material according to claim 1, **characterized in that** the active hydrogen is derived from one atomic group or two or more atomic groups selected from a carboxyl group, a hydroxyl group, an amino group, and an amide linkage in the biodegradable plastic material.

7. The biodegradable plastic material according to claim 1, **characterized in that** said compound being capable of reacting with active hydrogen is a crosslinking agent having a carbodiimide group.

8. The biodegradable plastic material according to claim 7, **characterized in that** said crosslinking agent having a carbodiimide group is dicyclohexylcarbodiimide or diisopropylcarbodiimide.

9. The biodegradable plastic material according to claim 1, **characterized by** containing a silicate.

10. The biodegradable plastic material according to claim 9, **characterized in that** said silicate has a silicon dioxide content of 50% or more.

11. The biodegradable plastic material according to claim 9, **characterized in that** said silicate is in a form of particles having a mean particle size of 50 μm or less.

12. A shaped biodegradable plastic article which is obtained by shaping a biodegradable plastic material treated with a compound being capable of reacting with active hydrogen in the biodegradable plastic.

13. The shaped biodegradable plastic article according to claim 12, **characterized in that** said biodegradable plastic material is a biodegradable polyester material.

14. The shaped biodegradable plastic article according to claim 12, **characterized in that** said biodegradable plastic material is (1) a copolymer of biodegradable polyester and a biodegradable polymer having an amino group or/and an amide linkage, or (2) a mixture of biodegradable polyester and a biodegradable polymer having an amino group or/and an amide linkage.

15. The shaped biodegradable plastic article according to claim 12, **characterized by** being a housing for electric appliance.

16. The shaped biodegradable plastic article according to claim 12, **characterized in that** said biodegradable plastic material treated with a compound being capable of reacting with active hydrogen has an acid value of 0.5 or less.

17. The shaped biodegradable plastic article according to claim 12, **characterized in that**, after aging for 48 hours under conditions at a constant temperature and at a constant humidity in which the temperature is 80°C and the relative humidity is 80%, an increase of an acid value is 0.2 or less and lowering of a molecular weight is 10% or less.

18. The shaped biodegradable plastic article according to claim 12, **characterized in that** the active hydrogen is derived from one atomic group or two or more atomic groups selected from a carboxyl group, a hydroxyl group, an amino group, and an amide linkage in the biodegradable plastic material.

19. The shaped biodegradable plastic article according to claim 12, **characterized in that** said compound being capable of reacting with active hydrogen is a crosslinking agent having a carbodiimide group.

20. The shaped biodegradable plastic article according to claim 19, **characterized in that** said crosslinking agent having a carbodiimide group is dicyclohexylcarbodiimide or diisopropylcarbodiimide.

21. The shaped biodegradable plastic article according to claim 12, **characterized by** containing a silicate.

22. The shaped biodegradable plastic article according to claim 21, **characterized in that** said silicate has a silicon dioxide content of 50% or more.

23. The shaped biodegradable plastic article according to claim 21, **characterized in that** said silicate is in a form of particles having a mean particle size of 50 μm or less.

24. A method for producing a shaped biodegradable plastic article, **characterized by** shaping a resultant mixture obtained by adding a compound being capable of reacting with active hydrogen to a biodegradable plastic material before, during, or after being molten and mixing them together.

25. The method for producing a shaped biodegradable plastic article according to claim 24, **characterized in that** said shaping is conducted by film extrusion, extrusion, or injection molding.

26. A method for producing a shaped biodegradable plastic article, **characterized by** shaping a resultant mixture obtained by adding a compound being capable of reacting with active hydrogen and a silicate simultaneously or individually to a biodegradable plastic material before, during, or after being molten and mixing them together.

27. The method for producing a shaped biodegradable plastic article according to claim 26, **characterized in that** said shaping is conducted by film extrusion, extrusion, or injection molding.

28. The method for producing a shaped biodegradable plastic article according to claim 26, **characterized in that** said silicate has a silicon dioxide content of 50% or more.

29. The method for producing a shaped biodegradable plastic article according to claim 26, **characterized in that** said silicate is in a form of particles having a mean particle size of 50 µm or less.

**Amended claims under Art. 19.1 PCT**

1. (Amended) A biodegradable plastic material which is treated with a compound being capable of reacting with active hydrogen contained in a terminal functional group of a polymer molecular in the biodegradable plastic.

2. The biodegradable plastic material according to claim 1, **characterized by** being a biodegradable polyester material.

3. The biodegradable plastic material according to claim 1, **characterized by** being (1) a copolymer of biodegradable polyester and a biodegradable polymer having an amino group or/and an amide linkage, or (2) a mixture of biodegradable polyester and a biodegradable polymer having an amino group or/and an amide linkage.

4. The biodegradable plastic material according to claim 1, **characterized in that** said biodegradable plastic material treated with a compound being capable of reacting with active hydrogen has an acid value of 0.5 or less.

5. The biodegradable plastic material according to claim 1, **characterized in that**, after aging for 48 hours under conditions at a constant temperature and at a constant humidity in which the temperature is 80°C and the relative humidity is 80%, an increase of an acid value is 0.2 or less and lowering of a molecular weight is 10% or less.

6. The biodegradable plastic material according to claim 1, **characterized in that** the active hydrogen is derived from one atomic group or two or more atomic groups selected from a carboxyl group, a hydroxyl group, an amino group, and an amide linkage in the biodegradable plastic material.

7. The biodegradable plastic material according to claim 1, **characterized in that** said compound being capable of reacting with active hydrogen is a crosslinking agent having a carbodiimide group.

8. The biodegradable plastic material according to claim 7, **characterized in that** said crosslinking agent having a carbodiimide group is dicyclohexylcarbodiimide or diisopropylcarbodiimide.

9. The biodegradable plastic material according to claim 1, **characterized by** containing a silicate.

10. The biodegradable plastic material according to claim 9, **characterized in that** said silicate has a silicon dioxide content of 50% or more.

11. The biodegradable plastic material according to claim 9, **characterized in that** said silicate is in a form of particles having a mean particle size of 50 µm or less.

12. (Amended) A shaped biodegradable plastic article which is obtained by shaping a biodegradable plastic material treated with a compound being capable of reacting with active hydrogen contained in a terminal functional group of a polymer molecular in the biodegradable plastic.

13. The shaped biodegradable plastic article according to claim 12, **characterized in that** said biodegradable plastic material is a biodegradable polyester material.

14. The shaped biodegradable plastic article according to claim 12, **characterized in that** said biodegradable plastic material is (1) a copolymer of biodegradable polyester and a biodegradable polymer having an amino group or/and an amide linkage, or (2) a mixture of biodegradable polyester and a biodegradable polymer having an amino group or/and an amide linkage.

**15.** The shaped biodegradable plastic article according to claim 12, **characterized by** being a housing for electric appliance.

**16.** The shaped biodegradable plastic article according to claim 12, **characterized in that** said biodegradable plastic material treated with a compound being capable of reacting with active hydrogen has an acid value of 0.5 or less.

**17.** The shaped biodegradable plastic article according to claim 12, **characterized in that**, after aging for 48 hours under conditions at a constant temperature and at a constant humidity in which the temperature is 80°C and the relative humidity is 80%, an increase of an acid value is 0.2 or less and lowering of a molecular weight is 10% or less.

**18.** The shaped biodegradable plastic article according to claim 12, **characterized in that** the active hydrogen is derived from one atomic group or two or more atomic groups selected from a carboxyl group, a hydroxyl group, an amino group, and an amide linkage in the biodegradable plastic material.

**19.** The shaped biodegradable plastic article according to claim 12, **characterized in that** said compound being capable of reacting with active hydrogen is a crosslinking agent having a carbodiimide group.

**20.** The shaped biodegradable plastic article according to claim 19, **characterized in that** said crosslinking agent having a carbodiimide group is dicyclohexylcarbodiimide or diisopropylcarbodiimide.

**21.** The shaped biodegradable plastic article according to claim 12, **characterized by** containing a silicate.

**22.** The shaped biodegradable plastic article according to claim 21, **characterized in that** said silicate has a silicon dioxide content of 50% or more.

**23.** The shaped biodegradable plastic article according to claim 21, **characterized in that** said silicate is in a form of particles having a mean particle size of 50 μm or less.

**24.** (Amended) A method for producing a shaped biodegradable plastic article, **characterized by** shaping a resultant mixture obtained by adding a compound being capable of reacting with active hydrogen contained in a terminal functional group of a polymer molecular in a biodegradable plastic material to the biodegradable plastic material before, during, or after being molten and mixing them together.

**25.** The method for producing a shaped biodegradable plastic article according to claim 24, **characterized in that** said shaping is conducted by film extrusion, extrusion, or injection molding.

**26.** (Amended) A method for producing a shaped biodegradable plastic article, **characterized by** shaping a resultant mixture obtained by adding a compound being capable of reacting with active hydrogen contained in a terminal functional group of a polymer molecular in a biodegradable plastic material and a silicate simultaneously or individually to the biodegradable plastic material before, during, or after being molten and mixing them together.

**27.** The method for producing a shaped biodegradable plastic article according to claim 26, **characterized in that** said shaping is conducted by film extrusion, extrusion, or injection molding.

**28.** The method for producing a shaped biodegradable plastic article according to claim 26, **characterized in that** said silicate has a silicon dioxide content of 50% or more.

**29.** The method for producing a shaped biodegradable plastic article according to claim 26, **characterized in that** said silicate is in a form of particles having a mean particle size of 50 μm or less.

# Fig.1A

# Fig.1B

$y = 5070.2x - 13.664$
$R^2 = 0.9947$

# Fig.2A

# Fig.2B

$$y = 5311.8x - 14.065$$
$$R^2 = 0.9967$$

# Fig.3A

# Fig.3B

# INTERNATIONAL SEARCH REPORT

| | International application No. |
|---|---|
| | PCT/JP03/03837 |

**A. CLASSIFICATION OF SUBJECT MATTER**
  Int.Cl$^7$  C08G63/91, C08J3/24, C08L67/00

According to International Patent Classification (IPC) or to both national classification and IPC

**B. FIELDS SEARCHED**

Minimum documentation searched (classification system followed by classification symbols)
  Int.Cl$^7$  C08G63/00-63/91, C08J3/24, C08L1/00-101/16

Documentation searched other than minimum documentation to the extent that such documents are included in the fields searched
  Jitsuyo Shinan Koho          1926-2003   Toroku Jitsuyo Shinan Koho    1994-2003
  Kokai Jitsuyo Shinan Koho    1971-2003   Jitsuyo Shinan Toroku Koho    1996-2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2000-143781 A  (Daicel Chemical Industries, Ltd.), | 1,2,6,12,13, 18,25 |
| A | 26 May, 2000 (26.05.00), Column 1, lines 23 to 33; column 6, lines 26 to 36 & WO 00/29460 A1          & EP 1048683 A1 | 3-5,7-11, 14-17,19-24, 26-29 |
| P,X | JP 2002-30208 A  (Toray Industries, Inc.), 31 January, 2002 (31.01.02), Claims 1, 4, 6, 11 (Family: none) | 1,2,6,7,12, 13,18,19,24, 25 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 April, 2003 (17.04.03) | 30 April, 2003 (30.04.03) |

| Name and mailing address of the ISA/ | Authorized officer |
|---|---|
| Japanese Patent Office | |
| Facsimile No. | Telephone No. |

Form PCT/ISA/210 (second sheet) (July 1998)